# EUROPÄISCHE PATENTSCHRIFT

(11) **EP 0 514 653 B1**
(45) Veröffentlichungstag und Bekanntmachung des Hinweises auf die Patenterteilung: **12.06.1996**
(21) Anmeldenummer: 92105607.3
(22) Anmeldetag: 01.04.1992
(51) Int. Cl.: F16J 15/32

(54) **Einrichtung mit einer Welle und einer Dichtungsanordnung**
Arrangement comprising a shaft and a sealing device
Arrangement comprenant un arbre et un dispositif d'étanchéité

(30) Priorität: 03.04.1991 DE 4110700
(43) Veröffentlichungstag der Anmeldung: 25.11.1992
(73) Patentinhaber: Wunsch, Eckart, D-75328 Schömberg (DE)
(72) Erfinder: Wunsch, Eckart, D-75328 Schömberg (DE)

(56) Entgegenhaltungen:
- FR-A- 1 279 292
- FR-A- 2 104 544
- GB-A- 206 141

## Beschreibung

Die Erfindung betrifft eine Einrichtung mit einer Welle und einer Dichtungsanordnung mit einer Lippendichtung nach dem Oberbegriff des Patentanspruchs 1.

Zum allgemeinen Stand der Technik zählen Gleitringdichtungen für Kreiselpumpen. Das Kennzeichen dieser Dichtungsart liegt darin, daß die bewegte und einem Verschleiß unterworfene Dichtfläche von der Wellenoberfläche weg in eine Fläche senkrecht zur Wellenachse gelegt ist. Die eigentliche Abdichtung findet zwischen den Flächen eines feststehenden Rings und eines rotierenden Gleitrings statt. Dieser Gleitring ist dabei in axialer Richtung durch eine Federkraft beaufschlagt. Während des Betriebes besteht zwischen den Gleitflächen eine Festkörperberührung, so daß ein Spalt nicht vorhanden ist (siehe Dubbel, Seiten 197, 198 "Gleitringdichtungen").

Aus dem allgemeinen Stand der Technik ist es auch bekannt, die Dichtung mit einer sogenannten Wurmfeder zu beaufschlagen, um dadurch den erforderlichen Anpreßdruck für die gewünschte Abdichtung zu erhalten. Es hat sich jedoch gezeigt, daß die Einlage einer solchen Wurmfeder bei sehr kleinen Wellendurchmessern aus Platzgründen nicht möglich ist.

Durch die FR-A-1 279 292 ist eine Dichtungsanordnung mit einer Lippendichtung offenbart, die am Kolbenkopf einer Kolbenstange angeordnet ist. Die Lippendichtung ist durch eine Feder axial mit Druck beaufschlagt, die gegen ein zwischengefügtes Druckstück wirkt. Nach der Art des Einbaus der Lippendichtung ist diese mit ihrer radial innenliegenden Dichtungslippe keinen dynamischen Belastungen unterworfen, während die äußere Dichtungslippe offensichtlich nur gegen axiale Bewegung abdichten soll.

Die GB-A-206 141 zeigt eine Lippendichtung in der Anwendung der Abdichtung bei einem Stoßdämpfer. Auch bei dieser bekannten Dichtungsanordnung steht die Lippendichtung mittels eines Druckstückes unter der Kraft einer axial wirkenden Feder. Die radial innen liegende Dichtungslippe dichtet gegen eine axial bewegliche Stange des Stoßdämpfers ab. Die radial äußere Dichtungslippe liegt statisch in einem Schraubenkopf an.

Aus der FR-A-2 104 544 ist die Lehre für die Schaffung einer Linienberührung zwischen einer Dichtung und einem gegen die Dichtung wirkenden Druckstück bekannt.

Gerade bei sehr kleinen Wellendurchmessern und gleichzeitig großen Wellenumfangsgeschwindigkeiten aufgrund sehr hoher Drehzahlen sowie bei ferner gleichzeitig hohen Flüssigkeits- und Gasdrücken wurde es bisher als ausgeschlossen angesehen, daß eine wirkungsvolle Dichtungsanordnung bei hohen Umfangsgeschwindigkeiten der abzudichtenden Welle und bei hohen Drükken eingesetzt werden konnte. Die geschilderten Betriebsbedingungen führten regelmäßig zu einer relativ raschen Alterung der eingesetzten Dichtungen, wodurch deren Spannkraft insbesondere an den Dichtungslippen verlorenging. Die Folge waren Leckagen und eindringende Flüssigkeiten an den mit den Wellen verbundenen Getriebeteilen und Motoren.

Es ist Aufgabe der Erfindung, eine Einrichtung mit einer Welle und einer Dichtungsanordnung der eingangs geschilderten Art zu schaffen, welche in ihrem gesamten Aufbau einfach ist, dazu eine einfache Montage erlaubt und unter Vermeidung der Nachteile des genannten Standes der Technik eine optimale Wirkung für Wellen mit sehr kleinen Durchmessern und hohen Betriebsdrehzahlen auch über einen langen Zeitraum gewährleistet.

Diese Aufgabe wird erfindungsgemäß durch die Merkmale des Patentanspruches 1 gelöst.

Ausbildungen und Weiterbildungen der Erfindung sind den Unteransprüchen 2 bis 9 zu entnehmen.

Bei dieser Form einer Dichtungsanordnung werden die beiden sich gegenüberliegenden Dichtungslippen der U-förmigen Lippendichtung durch Beaufschlagung durch ein Druckstück derart gespreizt, daß mindestens die eine Dichtungslippe dicht an der mit großen Wellenumfangsgeschwindigkeiten drehenden Welle dichtend anliegt. Die gegenüberliegende Dichtungslippe wird wahlweise dicht gegen die Gehäusewandung gepreßt. Die Andrückkraft des Druckstückes wird im wesentlichen durch die eingesetzte Schraubendruckfeder und eine möglicherweise unter Druck stehende Flüssigkeit oder Luft bzw. ein Gas erzielt. Um die Reibungsverluste durch das Anpressen der keilförmigen Wirkflächen möglichst gering zu halten, liegen die Wirkflächen des Druckstückes im wesentlichen linienförmig an den Innenkanten der Dichtungslippen der Lippendichtung an.

Um die linienförmige Anlage der Wirkflächen an die Innenkanten der Dichtungslippen zu erzielen, sind die Wirkflächen unter einem größeren Winkel zur Längsachse der Welle geneigt als die an die Wirkflächen anliegenden Endbereiche der Innenkanten der Dichtungslippen der Lippendichtung. Die Wirkflächen können dabei unter einem Winkel von etwa 45° zur Wellenlängsachse geneigt sein, während die Endbereiche unter einem Winkel von etwa 30° zur Wellenlängsachse geneigt sind. Hierdurch ist gewährleistet, daß die Abdichtung nur durch die äußerste Kante der Dichtungslippe erfolgt, wodurch eine grössere Reibung auf der Welle vermieden wird.

Die linienförmige Anlage zwischen den Wirkflächen des Druckstückes und der Dichtungslippen der Lippendichtung kann auch durch zwei oder mehr Ringe vorgenommen sein, die hintereinander geschaltet sind und ringförmig um die Innenkanten der Dichtungslippen der Lippendichtung laufen.

Ein wesentliches Merkmal der Erfindung ist es, daß die äußere und innere Dichtungslippe getrennt voneinander angedrückt werden. Versuche haben gezeigt, daß ein gleichzeitiges Andrücken der beiden Dichtungslippen durch ein einziges Druckstück praktisch unmöglich ist, weil die notwendigen engen Toleranzen bei den sehr kleinen Wellendurchmessern nicht eingehalten werden können, wenn wirtschaftliche Fertigung in der Serie vorausgesetzt wird. Bei den Versuchen wurde nachgewiesen, daß bei Verwendung eines einzigen Druckstückes beispielsweise die eine Dichtungslippe angedrückt wurde, während die zweite Dichtungslippe Flüssigkeit durchließ, weil hier der Druck nicht ausreichend war.

Die Erfahrungen, die im Abdichtungssystem gesammelt wurden, beziehen sich vorrangig auf das Dichtungsmaterial Teflon, welches keine Elastizität aufweist.

Ein wesentlicher Unterschied zwischen der radial äußeren und radial inneren Dichtungslippe liegt auch darin, daß die äußere Dichtungslippe fest an die Innenwandung der Bohrung (des Gehäuses) angedrückt werden kann, während die innere Dichtungslippe maßvoll mit beispielsweise einem Druck von 100 Gramm angedrückt wird, um die Reibung zur schnell drehenden Welle gering zu halten und somit auch die notwendige Energie bzw. den Stromverbrauch des Antriebsmotors zu verringern.

Die in den Unteransprüchen 5 und 6 geschilderten Ausbildungen bedeuten, daß wahlweise ein einzelnes Druckstück als um die Welle umlaufender Ring vorgesehen sein kann, welcher kopfseitig die keilförmigen Wirkflächen aufweist, die die Dichtungslippen der Lippendichtung auseinanderspreizt. Andererseits ist es jedoch auch möglich, daß beispielsweise ein Druckstück als Zylinderring ausgebildet ist, der an der Innenwandung des Gehäuses bzw. der Bohrung anliegt und kopfseitig eine Wirkfläche besitzt, welche die radial außenliegende Dichtungslippe gegen die Gehäusewandung drückt. Die radial innen liegende Dichtungslippe wird durch ein Druckstück unter Federbeaufschlagung an die Welle gepreßt. Dies bedeutet, daß nur das innenliegende Druckstück axial beweglich ist, während der Zylinderring fest auf dem Boden eines Gehäuseabsatzes aufsteht. In der Alternative dazu kann der radial außen liegende Zylinderring auch durch die Gehäusewand selbst gestaltet sein, indem dort keilringförmig eine Wirkfläche herausgearbeitet ist, welche die radial außen liegende Dichtungslippe der Lippendichtung gegen die Gehäusewandung drückt.

Vorteilhafterweise kann der Dichtungsring aus einem PTFE-Werkstoff gebildet sein. Er kann ebenso aber auch aus Viton, Neopren, Buna oder aus Polyamid gefertigt sein. Das Gehäuse kann sowohl aus Metall als auch aus einem Kunststoff gebildet sein.

Während aus dem bekannten Stand der Technik Lippendichtungen in teilweise ähnlicher Bauart wie die nach der erfindungsgemäßen Dichtungsanordnung immer nur für die Abdichtung bei axial beweglichen Kolbenstangen oder Stoßdämpfern eingesetzt wurden, hat der Fachmann mit der vorliegenden Dichtungsanordnung erstmals das Vorurteil der Fachwelt ausgeräumt und diese Dichtungsanordnung bei sehr schnell drehenden Wellen mit sehr kleinen Durchmessern von etwa 2,5 mm eingesetzt. Diese Tatsache und die einhergehenden besonderen technischen Merkmale machen den Erfolg dieser Dichtungsanordnung aus.

In der Zeichnung ist ein Beispiel der Erfindung dargestellt. Es zeigen:
- Figur 1: die Einrichtung mit einer Welle und einer Dichtungsanordnung im Halbschnitt am Beispiel einer durch Elektromotor angetriebenen Zahnradpumpe,
- Figur 2: die Einrichtung mit einer Welle und einer Dichtungsanordnung nach Figur 1 in geänderter Bauweise im Halbschnitt,
- Figure 3: die Einrichtung mit einer Welle und einer Dichtungsanordung nach Figur 2 in abgewandelter Bauweise im Halbschnitt,
- Figur 4: einen Ausschnitt IV in Figur 1 im Schnitt.

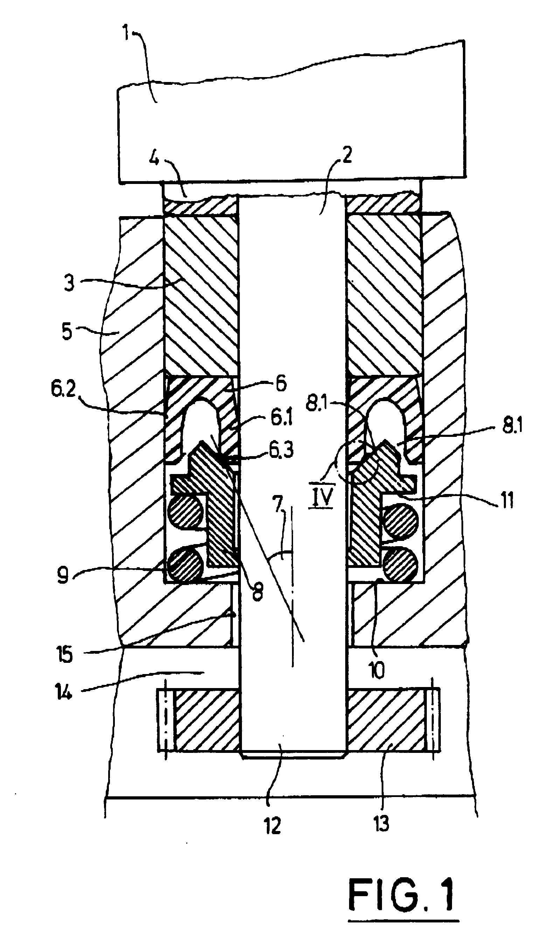

In dem Beispiel nach Figur 1 treibt ein Elektromotor 1 eine Welle 2 an. Diese Welle 2 besitzt einen sehr kleinen Durchmesser von etwa 2,5 mm und eine hohe Drehzahl bzw. Umfangsgeschwindigkeit. Die Welle 2 lagert in einem Gleitlager 3, welches motorseitig an den Motorflansch 4 axial anstößt. Natürlich sind auch Wälzlager einsetzbar. Die äußere Mantelfläche des Lagers 3 liegt an der Innenwand des Gehäuses 5 bzw. der Bohrung an. In axialer Fortsetzung zum Lager 3 befindet sich ein Dichtungsring 6, der eine Lippendichtung aus einem Kunststoff, vorzugsweise aus PTFE darstellt. Die Lippendichtung 6 ist im wesentlichen U-förmig gestaltet und liegt mit ihrer radial inneren Dichtungslippe 6.1 an dem Außenumfang der Welle 2 an. Die radial äußere Dichtungslippe 6.2 liegt an der Innenwand des Gehäuses 5 an. Der Endbereich der Innenkanten 6.3 der Dichtungslippen 6.1 und 6.2 ist unter einem Winkel 7 von etwa 30° derart geneigt, daß die beiden sich gegenüberliegenden Innenkanten 6.3 einen Winkel von etwa 60° einschließen.

In die im Querschnitt U-förmige Lippendichtung 6 greift in das offene U axial ein Druckstück 8 ein, welches ringförmig gestaltet und um die Welle 2 angeordnet ist. Kopfseitig weist dieses Druckstück 8 keilförmig verlaufende Wirkflächen 8.1 auf, die unter einem Winkel von etwa 45° verlaufen. Das Druckstück 8 steht unter der Wirkung einer Schraubendruckfeder 9, die sich einerseits am Gehäuseboden 10 und andererseits an einer Ringschulter 11 unterhalb der Wirkflächen 8.1 des Druckstückes 8 abstützt. Damit steht das Druckstück unter einer axial in Richtung auf die Lippendichtung 6 wirkenden Kraft, wodurch die Wirkfläche 8.1 des Druckstückes 8 gegen die Innenkanten 6.3 der Dichtungslippen 6.1 anstehen. Aufgrund der unterschiedlichen Winkel der Wirkflächen 8.1 und der Innenkanten 6.3 der Lippendichtung 6 entsteht zwischen der Dichtung 6 und dem Druckstück 8 im wesentlichen eine linienförmige Berührung. Die unter einem Winkel geneigten Wirkflächen pressen die Dichtungslippe 6.1 an den Außenumfang der Welle fest und dicht an. Durch das Druckstück 8 ist die dichte Anlage der Lippendichtung 6 nahezu unbegrenzt gewährleistet. Die äußere Dichtungslippe 6.2 wird beispielsweise durch den Flüssigkeitsdruck oder durch einen Gasdruck an die Innenwandung des Gehäuses 5 gepreßt.

Am stirnseitigen Ende 12 der Welle 2 befindet sich ein Zahnrad 13, welches mit einem hier nicht dargestellten zweiten Zahnrad in Eingriff steht und dadurch beispielsweise eine Zahnradpumpe bildet. Der im Falle einer Zahnradpumpe mit einem flüssigen Medium gefüllte Raum 14 steht unter dem Druck der Flüssigkeit, die durch den Ringspalt 15 des Gehäuses 5 auch gegen das Druckstück 8 anliegt und in Richtung auf die Lippendichtung 6 wirkt. Der Flüssigkeitsdruck kann durchaus auch die axiale Kraft der Schraubenfeder 9 verstärken, so daß die Wirkflächen 8.1 des Druckstückes 8 immer in fester Anlage an den Innenkanten 6.3 der Lippendichtung 6 bleiben. Durch diese Art der Dichtungsanordnung wird in technisch einfacher Weise und optimaler Gestaltung ein Durchdringen der Flüssigkeit aus dem Flüssigkeitsraum 14 zum Lager 3 bzw. zum Motor 1 verhindert.

Anstelle des vorgestellten Beispieles einer motorbetriebenen Zahnradpumpe für flüssige Medien ist es natürlich auch denkbar, diese Dichtungsanordnung in Räumen mit Gas- oder Luftdrücken anzuordnen.

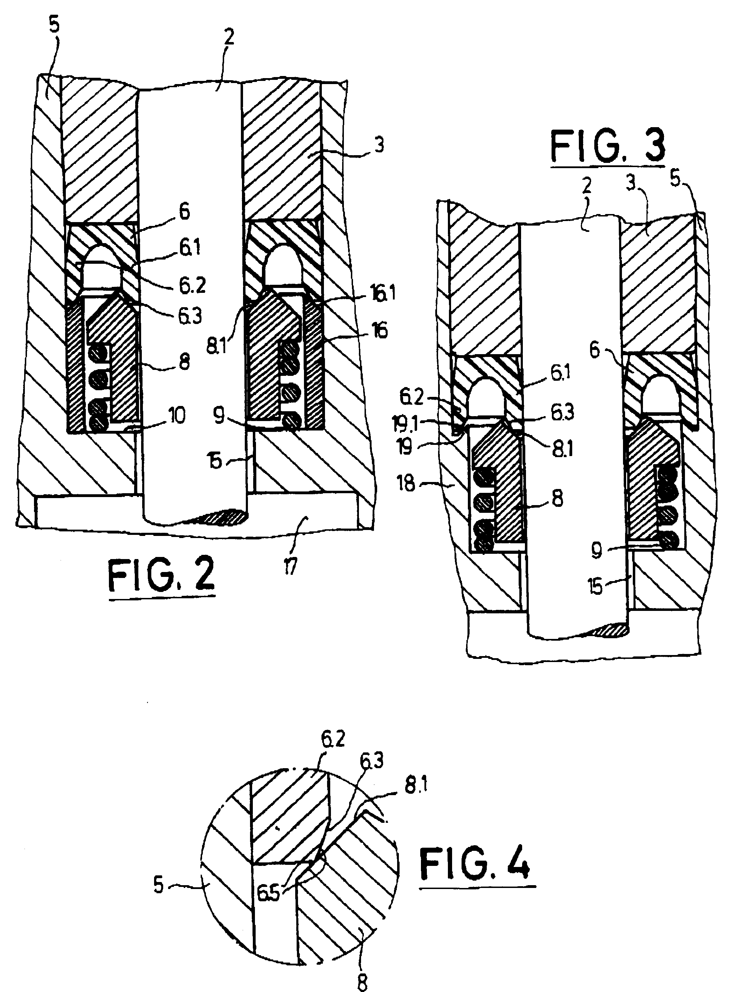

Das Gehäuse 5 kann wahlweise aus einem Kunststoff oder aus Metall gebildet sein. Wenn ein Metallgehäuse 5 eingesetzt wird, dann besteht die Möglichkeit, entsprechend der Figur 2 einen Zylinderring 16 einzusetzen, der auf dem Gehäuseboden 10 fest aufsteht und kopfseitig eine unter einem Winkel von etwa 45° verlaufende Wirkfläche 16.1 besitzt. Diese Wirkfläche 16.1 steht mit der Innenkante 6.3 der radial äußeren Dichtungslippe 6.2 der Lippendichtung 6 in Verbindung und drückt diese Dichtungslippe 6.2 gegen die Innenwand des Gehäuses 5. Das Druckstück 8, welches wiederum unter der Kraft einer axial wirkenden Schraubendruckfeder 9 steht, weist kopfseitig Wirkflächen 8.1 auf. In diesem Fall des in Figur 2 gezeigten Beispieles liegt allerdings nur die radial innere Wirkfläche 8.1 an der Innenkante 6.3 der radial innenliegenden Dichtungslippe 6.1 der Lippendichtung 6 an und preßt diese Dichtungslippe 6.1 an den Außenumfang der Welle 2 dicht an.

Im übrigen gleicht diese Darstellung nach Figur 2 den Konstruktionsmerkmalen der Figur 1. Auch hier soll wieder eine elektromotorisch angetriebene Zahnradpumpe gezeigt werden, von deren Pumpengehäusedruckseite 17 Flüssigkeit durch den Ringspalt 15 des Gehäuses 5 in Richtung der Lippendichtung 6 strömt.

Eine weitere und in Versuchen bewährte Version der Dichtungsanordnung ist in Figur 3 gezeigt. In diesem Beispiel ist der Zylinderring 16 nach Figur 2 durch eine entsprechende Ausformung 18 des Gehäuses ersetzt. Diese Ausformung 18 besteht darin, daß in Höhe der Innenkante 6.3 der radial äußeren Dichtungslippe 6.2 der Lippendichtung 6 ein ringförmiger Gehäusevorsprung 19 einstückig angeformt ist, dessen Wirkfläche 19.1 radial nach außen gegen die Innenkante 6.3 der Lippendichtung 6 ansteht. Auch hier ist die Wirkfläche 19.1 unter einem Winkel von etwa 45° geneigt, während die Innenkante 6.3 unter einem Winkel von etwa 30° zur Wellenlängsachse geneigt ist, sodaß die linienförmige Berührung wiederum eintritt.

Das Druckstück 8 mit der Wirkfläche 8.1 und der Schraubendruckfeder 9 entspricht der Konstruktion nach Figur 2.

In Figur 4 ist der Kreisausschnitt IV nach Figur 1 vergrößert dargestellt. Die Wirkfläche 8.1 des Druckstückes 8 befindet sich wiederum unter einem Winkel von etwa 45°, während die Innenkante 6.3 im Endbereich der radial äußeren Dichtungslippe 6.2 der Lippendichtung 6 unter einem Winkel von 30° zur Wellenlängsachse geformt ist.

Die Lippendichtung 6 besteht in bevorzugter Ausbildung der Erfindung aus einem Kunststoff und kann wahlweise aus PTFE, Buna, Neopren, Viton oder Polyamid gebildet sein. Das Gehäuse 5 kann wahlweise aus Metall oder aus Kunststoff bestehen.

Die Lippendichtung 6 aus PTFE kann durch Zerspanung auf einem Drehautomaten hergestellt werden und besitzt Dichtlippen 6.1 und 6.2, deren Innenkanten 6.3 einen Winkel von 60° zwischen sich einschließen.

## Patentansprüche

1. Einrichtung mit einer Welle (2) und einer Dichtungsanordnung mit einer Lippendichtung (6), die unter der Kraft einer axial wirkenden Feder (9) steht und Dichtungslippen (6.1, 6.2) aufweist, die durch keilförmig verlaufende Wirkflächen (8.1, 16.1, 19.1) von axial wirksamen Druckstücken (8) getrennt und unabhängig voneinander radial gespreizt sind,
dadurch gekennzeichnet,
daß zumindest die radial innere Dichtungslippe (6.1) an dem Außenumfang der mit großen Umfansgeschwindigkeiten drehenden Welle (2) mit einem Durchmesser von etwa 2,5 Millimetern in einem oder angrenzend an ein Gehäuse (5) mit Medien unter Druck dicht anliegt, wobei die Wirkflächen (8.1, 16.1, 19.1) der Druckstücke (8) im wesentlichen linienförmig an den Endbereichen der Innenkanten (6.3) der Dichtungslippen (6.1, 6.2) mit radial wirkender Kraft anliegen und unter einem größeren Winkel zur Längsachse der Welle (2) geneigt sind als die an die Wirkflächen (8.1, 16.1, 19.1) anliegenden Endbereiche der Innenkanten (6.3) der Dichtungslippen (6.1, 6.2) der Lippendichtung (6).

2. Einrichtung nach Anspruch 1,
dadurch gekennzeichnet,
daß die Wirkflächen (8.1, 16.1, 19.1) unter einem Winkel von etwa 45° zur Längsachse der Welle (2) geneigt sind.

3. Einrichtung nach Anspruch 1,
dadurch gekennzeichnet,
daß die Innenkanten (6.3) der Dichtungslippen (6.1, 6.2) der Lippendichtung (6) unter einem Winkel von etwa 30° zur Längsachse der Welle (2) geneigt sind.

4. Einrichtung nach Anspruch 1 oder 2,
dadurch gekennzeichnet,
daß die Wirkflächen (8.1) kopfseitig an einem einzelnen Druckstück (8) gebildet sind, welches unter der axialen Wirkung einer Schraubendruckfeder (9) steht.

5. Einrichtung nach einem der Ansprüche 1, 2 oder 4,
dadurch gekennzeichnet,
daß die auf die radial äußere Dichtungslippe (6.2) der Lippendichtung (6) stehende Wirkfläche (19.1) durch einen Gehäusering (19) gebildet ist, während die zweite Wirkfläche (8.1) kopfseitig an einem druckfederbeaufschlagten Druckstück (8) vorgesehen ist.

6. Einrichtung nach einem der Ansprüche 1, 2 oder 4,
dadurch gekennzeichnet,
daß die auf die radial äußere Dichtungslippe (6.2) der Lippendichtung (6) stehende Wirkfläche (16.1) durch einen Zylinderring (16) an der Innenwand des Gehäuses (5) gebildet ist, während die zweite Wirkfläche (8.1) kopfseitig an einem druckfederbeaufschlagten Druckstück (8) vorgesehen ist.

7. Einrichtung nach einem oder mehreren der vorgenannten Ansprüche,
dadurch gekennzeichnet,
daß die Lippendichtung (6) stirnseitig axial gegen ein Wellenlager (3) anliegt.

8. Einrichtung nach einem oder mehreren der vorgenannten Ansprüche,
dadurch gekennzeichnet,
daß die Lippendichtung (6) wahlweise aus PTFE, Viton, Buna, Neopren oder Polyamid gebildet ist.

9. Einrichtung nach einem oder mehreren der vorgenannten Ansprüche,
dadurch gekennzeichnet,
daß das Gehäuse (5) wahlweise aus Metall oder Kunststoff gebildet ist.

## Claims

1. Device comprising a shaft (2) and a sealing arrangement with a lip seal (6) being under the force of an axially acting spring (9) and having lip seals (6.1, 6.2), which are separated by working surfaces (8.1, 16.1, 19.1) of wedge-shaped arrangement from axially working thrust pieces (8) and are regardlessly of each other radially spread apart,
characterized in that
at least the radially inner sealing lip (6.1) is pressed tightly on the outside circumference of the shaft (2), rotating with at least 10 000 rpm and having a diameter of about 2.5 mm, inside or bordering on a housing (5) with mediums under pressure, whereby the working surfaces (8.1, 16.1, 19.1) of the thrust pieces (8) fits essentially linear to the end sections of the inside edges (6.3) of the sealing lips (6.1, 6.2) with a radially acting force and are inclined to the longitudinal axis of the shaft (2) under a greater angle than the end sections of the inside edges (6.3) of the sealing lips (6.1, 6.2) of the lip seal (6) adjacent to the working surfaces (8.1, 16.1, 19.1).

2. Device according to claim 1,
characterized in that
the angle between the working surfaces (8.1, 16.1, 19.1) and the longitudinal axis of the shaft (2) is approximately 45°.

3. Device according to claim 1,
characterized in that
the angle between the inside edges (6.3) of the selaing lips (6.1, 6.2) of the lip seal (6) and the longitudinal axis of the shaft (2) is approximately 30°.

4. Device according to claim 1 or 2,
characterized in that
the working surfaces (8.1) are built up at the head end of a single thrust piece (8), which is under the axially force of a helical compression spring (9).

5. Device according to one of the claims 1, 2 or 4,
characterized in that
the working surface (19.1) bearing on the radially outer sealing lip (6.2) of the lip seal (6) is formed by a housing shoulder (19), whereas the second working surface (8.1) is provided on the head end of a compression spring admitted thrust piece (8).

6. Device according to one of the claims 1, 2 or 4,
characterized in that
the working surface (16.1) bearing on the radially outer sealing lip (6.2) of the lip seal (6) is formed by a cylinder ring (16) at the inside wall of the housing (5), whereas the second working surface (8.1) is provided on the head end of a compression spring admitted thrust piece (8).

7. Device according to one or more of the above mentioned claims,
characterized in that
the lip seal (6) fits with its front end axially against a bearing (3).

8. Device according to one or more of the above mentioned claims,
characterized in that
the lip seal (6) is made of a material selected from the group of PTFE, Viton, Buna, Neoprene or Polyamid.

9. Device according to one or more of the above mentioned claims,
characterized in that
the housing (5) is made of a material selected from the group consisting of metal or plastic.

## Revendications

1. Dispositif comportant un arbre (2) et un dispositif d'étanchéité avec une étanchéité à lèvres (6), qui est soumise à l'action d'un ressort (9) agissant axialement et présente des lèvres d'étanchéité (6.1, 6.2), qui sont séparées de pièces de pression (8) agissant axialement, par des surfaces actives (8.1, 16., 19.1) s'étendant en forme de coin et sont écartées radialement, indépendamment l'une de l'autre,
caractérisé
en ce qu'au moins la lèvre d'étanchéité (6.1) intérieure s'applique de manière étanche, avec des fluides sous pression, contre le pourtour extérieur de l'arbre (2), tournant au moins à 10 000 t/min, d'un diamètre d'environ 2,5 millimètres, dans un boîtier (5) ou de manière adjacente à celui-ci, les surfaces actives (8.1, 16.1, 19.1) des pièces de pression (8) s'appliquant sensiblement sur une ligne contre les zones d'extrémité des bords intérieurs (6.3) des lèvres d'étanchéité (6.1, 6.2), avec une force agissant radialement, et étant inclinées par rapport à l'axe longitudinal de l'arbre (2), sous un angle plus grand que les zones d'extrémité, s'appliquant contre les surfaces actives (8.1, 16.1, 19.1), des bords intérieurs (6.3) des lèvres d'étanchéité (6.1, 6.2) de l'étanchéité à lèvres (6).

2. Dispositif d'étanchéité selon la revendication 1,
caractérisé
en ce que les surfaces actives (8.1, 16.1, 19.1) sont inclinées sous un angle d'environ 45° par rapport à l'axe longitudinal de l'arbre (2).

3. Dispositif d'étanchéité selon la revendication 1,
caractérisé
en ce que les bords intérieurs (6.3) des lèvres d'étanchéité (6.1, 6.2) de l'étanchéité à lèvres (6) sont inclinés sous un angle d'environ 30° par rapport à l'axe longitudinal de l'arbre (2).

4. Dispositif d'étanchéité selon la revendication 1 ou 2,
caractérisé
en ce que les surfaces actives (8.1) sont formées côté tête, sur une pièce de pression (8) individuelle, qui est sous l'action axiale d'un ressort de pression hélicoïdal (9).

5. Dispositif d'étanchéité selon l'une des revendication 1, 2 ou 4,
caractérisé
en ce que la surface active (19.1) se trouvant sur la lèvre d'étanchéité (6.2) radialement extérieure de l'étanchéité à lèvres (6), est formée par un anneau (19) du boîtier, tandis que la deuxième surface active (8.1) est prévue, côté tête, sur une pièce de pression (8) soumise à l'action d'un ressort de pression.

6. Dispositif d'étanchéité selon l'une des revendication 1, 2 ou 4,
caractérisé
en ce que la surface active (19.1) se trouvant sur la lèvre d'étanchéité (6.2) radialement extérieure de l'étanchéité à lèvres (6), est formée par un anneau de cylindre (16) sur la paroi intérieure du boîtier (5), tandis que la deuxième surface active (8.1) est prévue, côté tête, sur une pièce de pression (8) soumise à l'action d'un ressort de pression.

7. Dispositif d'étanchéité selon une ou plusieurs des revendications précédentes,
caractérisé
en ce que l'étanchéité à lèvres (6) s'applique frontalement et axialement contre un palier d'arbre (3).

8. Dispositif d'étanchéité selon une ou plusieurs des revendications précédentes,
caractérisé
en ce que l'étanchéité à lèvres (6) est réalisée au choix en PIFE, Viton, Buna, néoprène ou polyamide.

9. Dispositif d'étanchéité selon une ou plusieurs des revendications précédentes,
caractérisé
en ce que le boîtier (5) est réalisée au choix en métal ou en matière plastique.
